# EUROPÄISCHE PATENTANMELDUNG

(11) **EP 3 903 996 A1**
(43) Veröffentlichungstag der Anmeldung: **03.11.2021**
(21) Anmeldenummer: 21170649.4
(22) Anmeldetag: 27.04.2021
(51) Int. Cl.: B23Q 17/00, B23Q 17/12, B23Q 17/22

(54) **WERKSTÜCKANSCHLAG FÜR EINE WERKZEUGMASCHINE, WERKZEUGMASCHINE SOWIE VERFAHREN ZUM POSITIONIEREN EINES WERKSTÜCKS**

(30) Priorität: 30.04.2020 DE 102020111758
(71) Anmelder: Homag Bohrsysteme GmbH, 33442 Herzebrock-Clarholz (DE)
(72) Erfinder: Reichelt, Daniel, 33442 Herzebrock-Clarholz (DE); Kettner, Richard, 02796 Kurort Jonsdorf (DE)
(74) Vertreter: Hoffmann Eitle

(57) **Zusammenfassung**

Die Erfindung betrifft einen Werkstückanschlag (18) für eine Werkzeugmaschine (10), insbesondere eine Holzbearbeitungsmaschine, mit wenigstens einem Anschlagelement (19), das zu einem Arbeitsbereich (14) der Werkzeugmaschine (10) anordenbar ist, um ein Werkstück (11) durch einen Kontakt zum wenigstens einen Anschlagelement (19) im Arbeitsbereich (14) der Werkzeugmaschine (10) zu positionieren, wobei eine Schwingungseinrichtung (22) vorgesehen ist, die das wenigstens eine Anschlagelement (19) in einen Schwingungszustand versetzt und durch welche der Schwingungszustand des wenigstens einen Anschlagelements (19) erfassbar ist, um einen Kontakt zwischen dem wenigstens einen Anschlagelement (19) mit dem zu positionierenden Werkstück (11) zu ermitteln sowie eine Werkzeugmaschine (10), insbesondere Holzbearbeitungsmaschine, und ein Verfahren zum Positionieren eines Werkstücks (11).

## Beschreibung

### Technisches Gebiet

Die Erfindung betrifft einen Werkstückanschlag für eine Werkzeugmaschine, eine Werkzeugmaschine sowie ein Verfahren zum Positionieren eines Werkstücks.

### Stand der Technik

Zum Bearbeiten von Werkstücken mit einer Werkzeugmaschine, beispielsweise einer Holzbearbeitungsmaschine, ist eine genaue Positionierung des Werkstücks in einem Arbeitsbereich der Werkzeugmaschine erforderlich. CNC basierte Bearbeitungsmaschinen weisen einen definierten Maschinennullpunkt auf, anhand dessen die Steuerung des Bearbeitungsaggregats erfolgt. Nach dem Positionieren des Werkstücks im Arbeitsbereich der Werkzeugmaschine ist deshalb eine Nullpunkterfassung des Werkstücks erforderlich, damit durch die Maschinensteuerung eine präzise Steuerung des Bearbeitungsaggregats zum Werkstück ermöglicht ist. Bei stationären Werkzeugmaschinen erfolgt die Positionierung des Werkstücks beispielsweise dadurch, dass ein Maschinenbediener dieses gegen einen ersten Anschlag schiebt, beispielsweise in X-Richtung, und anschließend gegen einen weiteren Anschlag in Y-Richtung. Dabei ist eine optische und/oder haptische Kontrolle der Werkstückposition durch den Maschinenbediener vorgesehen. Bei Durchlaufmaschinen erfolgt der Ein- und Austransport sowie die Positionierung der zu bearbeitenden Werkstücke automatisiert, eine optische oder haptische Kontrolle der Werkstückposition erfolgt nicht. Für eine automatisierte Überprüfung, ob das Werkstück im Arbeitsbereich richtig positioniert ist, ist eine zusätzliche Vorrichtung erforderlich.

### Darstellung der Erfindung

Der Erfindung liegt die Aufgabe zugrunde, einen Werkstückanschlag für eine Werkzeugmaschine vorzuschlagen, durch welchen eine vereinfachte Werkstückpositionierung ermöglicht ist. Zudem ist es Aufgabe der Erfindung eine Werkzeugmaschine vorzuschlagen, durch die ein Werkstückausschuss aufgrund einer fehlerhaften Werkstückpositionierung reduziert ist. Des Weiteren ist es Aufgabe der Erfindung ein Verfahren vorzuschlagen, das eine einfache und präzise Positionierung eines Werkstücks in einer Werkzeugmaschine ermöglicht.

Ein Werkstückanschlag für eine Werkzeugmaschine ist in Anspruch 1 definiert. Eine Werkzeugmaschine ist in Anspruch 9 definiert. Ein Verfahren zum Positionieren eines Werkstücks ist in Anspruch 11 definiert. Unteransprüche beziehen sich auf bestimmte Ausführungsformen.

Die Aufgabe wird durch ein Werkstückanschlag für eine Werkzeugmaschine, insbesondere eine Holzbearbeitungsmaschine, mit wenigstens einem Anschlagelement, das zu einem Arbeitsbereich der Werkzeugmaschine anordenbar ist, um ein Werkstück durch einen Kontakt zum wenigstens einen Anschlagelement im Arbeitsbereich der Werkzeugmaschine zu positionieren, gelöst, wobei eine Schwingungseinrichtung vorgesehen ist, die das wenigstens eine Anschlagelement in einen Schwingungszustand versetzt und durch welche der Schwingungszustand des wenigstens einen Anschlagelements erfassbar ist, um einen Kontakt zwischen dem wenigstens einen Anschlagelement mit dem zu positionierenden Werkstück zu ermitteln.

Durch einen solchen Werkstückanschlag kann ein Kontakt, d.h. eine Berührung zwischen dem zu positionierenden Werkstück und dem wenigstens einen Anschlagelement ermittelt werden. Durch eine solche aktive Werkstückerkennung kann eine einfache Positionierung des Werkstücks im Arbeitsbereich der Werkzeugmaschine ermöglicht sein. Hierfür wird das Anschlagelement durch die Schwingungseinrichtung in einen definierten Schwingungszustand versetzt und der Schwingungszustand durch die Schwingungseinrichtung sensorisch erfasst. Die Schwingungseinrichtung kann somit sowohl zur Schwingungserregung als auch zur Schwingungserfassung vorgesehen sein. Berührt kein Werkstück das Anschlagelement, führt das Anschlagelement eine ungedämpfte Schwingung aus. Wird das Werkstück zum Positionieren in Kontakt zu dem wenigstens einen Anschlagelement gebracht, verändert sich der Schwingungszustand des Anschlagelements, indem die Schwingung gedämpft wird. Aufgrund dieser Schwingungsänderung kann ein Kontakt zwischen dem Werkstück und dem Anschlagelement und somit ein korrektes Positionieren des Werkstücks bestimmt werden. Eine fehlerhafte Bearbeitung und ein Ausschuss fehlerhaft bearbeiteter Werkstücke kann dadurch minimiert werden. Durch einen solchen Werkstückanschlag ist zudem eine Nullpunkterfassung des Werkstücks ermöglicht, wodurch eine unmittelbare Ansteuerung des Bearbeitungsaggregats durch eine Maschinensteuerung erfolgen kann.

Eine bevorzugte Weiterbildung des Werkstückanschlags kann vorsehen, dass die Schwingungseinrichtung in dem wenigstens einen Anschlagelement integriert ist oder an dem wenigstens einen Anschlagelement vorgesehen ist. Durch die Integration der Schwingungseinrichtung in dem wenigstens einen Anschlagelement oder das Vorsehen der Schwingungseinrichtung am wenigstens einen Anschlagelement kann eine kompakte Ausgestaltung des Werkstückanschlags erreicht sein. Zudem kann die Schwingungseinrichtung auf diese Weise ohne umfangreiche konstruktive Änderungen in bestehende Werkstückanschläge integriert werden.

In einer weiteren vorteilhaften Weiterbildung des Werkstückanschlags kann die Schwingungseinrichtung zum Anregen und/oder Erfassen des Schwingungszustands zumindest ein Piezoelement oder zumindest eine Magnetspuleneinrichtung und/oder eine Sensoreinrichtung aufweisen. Bevorzugt kann vorgesehen sein, dass das Anregen und das Erfassen des Schwingungszustands durch ein Piezoelement oder durch eine Magnetspuleneinrichtung vorgesehen ist. Ebenso kann vorgesehen sein, dass das Anregen des Schwingungszustands durch ein Piezoelement oder eine Magnetspuleneinrichtung vorgesehen ist und das Erfassen des Schwingungszustands durch ein weiteres Piezoelement oder eine weitere Magnetspuleneinrichtung oder die Sensoreinrichtung. Durch ein solches Piezoelement oder eine solche Magnetspuleneinrichtung kann das Anschlagelement in einen Schwingungszustand mit einer definierten Schwingungsamplitude und/oder Schwingungsfrequenz versetzt werden. Zudem kann das Piezoelement oder die Magnetspuleneinrichtung eine oszillierende Schwingung des Anschlagelements anregen. Durch das Piezoelement oder die Magnetspuleneinrichtung können Mikroschwingungen erzeugt werden. Dadurch kann eine geringe Schwingungsauslenkung des Anschlagelements im pm-Bereich erreicht sein, sodass keine negative Beeinflussung des Werkstücks durch die Schwingungen auftreten. Zudem hat das Piezoelement oder die Magnetspuleneinrichtung einen geringen Energiebedarf, sodass die Schwingungseinrichtung einen geringen Stromverbrauch aufweist.

Vorteilhafterweise kann der Werkstückanschlag eine Halteeinrichtung aufweisen, durch welche das wenigstens eine Anschlagelement schwingungsentkoppelt aufgenommen ist. Durch die Schwingungsentkopplung des wenigstens einen Anschlagelements kann dieses eine ungedämpfte Schwingung ausführen. Zudem ist durch die Schwingungsentkopplung verhindert, dass die Schwingungen auf die Werkzeugmaschine oder Komponenten der Werkzeugmaschine übertragen werden.

Eine weitere Ausgestaltung des Werkstückanschlags kann vorsehen, dass das wenigstens eine Anschlagelement zumindest teilweise aus einem thermoplastischen Kunststoff oder aus Polyoxymethylen (POM) ausgebildet ist. Thermoplastische Kunststoffe oder insbesondere Polyoxymethylen (POM) weisen ein vorteilhaftes tribologisches Verhalten auf, wodurch Beschädigungen am Werkstück durch das Anschlagelement reduziert werden können.

In einer alternativen Ausgestaltung des Werkstückanschlags kann ebenso vorgesehen sein, dass das wenigstens eine Anschlagelement zumindest teilweise aus einem metallischen Werkstoff, vorzugsweise aus Messing, ausgebildet ist. Auf diese Weise kann ein widerstandsfähiges und belastbares Anschlagelement erreicht sein, welches eine geringe Verschleißneigung aufweist.

Eine Weiterbildung des Werkstückanschlags kann zudem vorsehen, dass das wenigstens eine Anschlagelement in dessen Längserstreckung einen freien Endabschnitt als Anschlag für das Werkstück bildet und die Schwingungseinrichtung in oder an dem freien Endabschnitt des Anschlagelements vorgesehen ist. Das Anschlagelement kann eine beliebige Geometrie aufweisen, beispielsweise kann das Anschlagelement einen zylindrischen oder rechteckigen Querschnitt aufweisen. Insbesondere durch die zylindrische Ausgestaltung kann das Anschlagelement in der X-/Y-Ebene als richtungsunabhängiger Anschlag für das Werkstück ausgebildet sein. In der X-/Y-Ebene kann das Anschlagelement dadurch in jeder Richtung einen präzisen Anschlag für das Werkstück bilden. Das Anschlagelement kann auf diese Weise auch als Mittenanschlag vorgesehen sein oder auch ohne eine Verdrehsicherung ausgebildet sein. Ebenso kann das wenigstens eine Anschlagelement sowohl vertikal als auch horizontal zur Werkstückauflage ausgerichtet sein. Indem die Schwingungseinrichtung in oder an dem freien Endabschnitt vorgesehen ist, können die Schwingungen zudem unmittelbar zum Anschlag des Werkstücks erzeugt und erfasst werden.

Vorteilhafterweise kann das wenigstens eine Anschlagelement des Werkstückanschlags einen Hohlraum aufweisen oder zumindest bereichsweise als ein Hohlkörper ausgebildet sein. Vorzugsweise weist der Hohlraum oder Hohlkörper in Richtung des freien Endabschnitts eine abnehmende Wanddicke auf. Durch diese Ausgestaltung kann das Schwingungsverhalten des Anschlagelements positiv beeinflusst werden. Insbesondere durch die zum freien Endabschnitt abnehmende Wanddicke des Anschlagelements kann ein Schwingungsverhalten ähnlich einer Schwing- bzw. Stimmgabel erreicht werden. In dem Hohlraum oder Hohlkörper kann zudem die Schwingungseinrichtung in einfacher Weise in dem Anschlagelement integriert sein.

Eine alternative Ausgestaltung des Anschlagelements des Werkstückanschlags kann vorsehen, dass der freie Endabschnitt des wenigstens einen Anschlagelements zwei Schwingungsschenkel als Anschlag für das Werkstück aufweist. Die zwei Schwingungsschenkel können eine sehr konstante Schwingungserregung des freien Endabschnitts des wenigstens einen Anschlagelements ermöglichen. Auf diese Weise können auch geringe Änderungen des Schwingungszustands, also eine geringe Änderung der Schwingungsfrequenz und/oder Schwingungsamplitude erfasst werden. Dadurch kann auch eine sehr geringe Krafteinwirkung, also eine leichte Berührung, des Werkstücks auf das Anschlagelement erfassbar sein.

Besonders bevorzugt kann vorgesehen sein, dass die Schwingungseinrichtung des Werkstückanschlags eine Auswerteeinheit aufweist, durch die eine Änderung des erfassten Schwingungszustands ermittelbar ist. Vorzugsweise kann durch die Auswerteeinheit eine Änderung einer Schwingungsamplitude und/oder Schwingungsfrequenz des erfassten Schwingungszustands ermittelbar sein. Durch die Auswerteeinheit kann einem Maschinenbediener oder einer Maschinensteuerung Informationen bezüglicher einer korrekten Positionierung des Werkstücks im Arbeitsbereich der Werkzeugmaschine mitgeteilt werden. Die Auswerteeinheit kann hierfür mit einer Anzeigeeinrichtung oder mit einer Maschinensteuerung verbunden sein. Die Anzeigeeinrichtung kann ein Bildschirm oder auch eine optische, akustische oder haptische Anzeigeeinrichtung sein. Durch die Verbindung der Auswerteeinheit mit der Maschinensteuerung kann beispielsweise vorgesehen sein, dass eine Ansteuerung des Bearbeitungsvorgangs erst dann erfolgt, wenn das Werkstück korrekt zu dem wenigstens einen Anschlagelement positioniert ist.

Die Aufgabe wird zudem durch eine Werkzeugmaschine, insbesondere Holzbearbeitungsmaschine, mit einer Werkstückauflage zum Aufnehmen wenigstens eines Werkstücks, mit einem der Werkstückauflage zugeordneten Werkstückanschlag, um das wenigstens eine Werkstück in einem Arbeitsbereich der Werkzeugmaschine zu positionieren sowie mit zumindest einem Bearbeitungsaggregat zum Bearbeiten des wenigstens einen Werkstücks, gelöst, wobei der Werkstückanschlag gemäß einer der zuvor beschriebenen Ausführungsformen ausgebildet ist.

Eine Werkzeugmaschine mit einem solchen Werkstückanschlag ermöglicht beim Positionieren des Werkstücks im Arbeitsbereich der Werkzeugmaschine eine aktive Werkstückerkennung. D.h. einem Maschinenbediener oder einer Maschinensteuerung kann bei einem Kontakt zwischen dem Werkstückanschlag und dem zu positionierenden Werkstück Informationen bezüglich einer korrekten oder nicht korrekten Positionierung des Werkstücks mitgeteilt werden. Dadurch kann eine ungenaue Positionierung des Werkstücks im Arbeitsbereich der Werkzeugmaschine verhindert werden, wodurch eine fehlerhafte Bearbeitung des Werkstücks vermieden wird. Auf diese Weise kann ein Ausschuss fehlerhaft bearbeiteter Werkstücke minimiert werden. Zudem kann durch den Werkstückanschlag eine Nullpunkterfassung des Werkstücks erfolgen, sodass durch die Maschinensteuerung der Werkzeugmaschine eine unmittelbare Ansteuerung des Bearbeitungsaggregats erfolgen kann.

Eine vorteilhafte Weiterbildung der Werkzeugmaschine kann vorsehen, dass der Werkstückanschlag mehrere Anschlagelemente aufweist, die in der Weise zum Arbeitsbereich der Werkzeugmaschine angeordnet sind, dass ein Positionieren des wenigstens einen Werkstücks auf der Werkstückauflage in einer X-Richtung und/oder Y-Richtung vorgesehen ist, wobei jedes Anschlagelement eine Schwingungseinrichtung aufweist. Durch einen solchen Werkstückanschlag mit mehreren Anschlagelementen kann eine Positionierung des Werkstücks auf der gesamten Werkstückauflage sowohl in X-Richtung als auch in Y-Richtung vorgesehen sein. Die mehreren Anschlagelemente können zudem eine aktive Werkstückerkennung entlang der gesamten X-Richtung und/oder Y-Richtung des Arbeitsbereichs ermöglichen, sodass beispielsweise eine automatisierte Positionserkennung des Werkstücks auf der Werkstückauflage vorgesehen sein kann.

Des Weiteren wird die Aufgabe durch ein Verfahren zum Positionieren eines Werkstücks in einem Arbeitsbereich einer Werkzeugmaschine, insbesondere einer Holzbearbeitungsmaschine, gelöst, wobei das Verfahren die Schritte aufweist, dass zumindest ein Anschlagelement eines Werkstückanschlags der Werkzeugmaschine durch eine Schwingungseinrichtung in einen Schwingungszustand versetzt wird, der Schwingungszustand des wenigstens einen Anschlagelements durch die Schwingungseinrichtung erfasst wird, das Werkstück dem Arbeitsbereich zugeführt und in Kontakt zu dem wenigstens einen Anschlagelement gebracht wird, um das Werkstück im Arbeitsbereich der Werkzeugmaschine zu positionieren und eine Auswerteeinheit eine Änderung des erfassten Schwingungszustands ermittelt, um den Kontakt zwischen dem wenigstens einen Anschlagelement mit dem Werkstück zu bestimmen.

Ein solches Verfahren ermöglicht eine einfache Bestimmung der Positionierung des zu bearbeitenden Werkstücks zum Werkstückanschlag. Dies ist dadurch erreicht, dass durch das Verfahren eine aktive Werkstückerkennung erfolgt, sodass ein Maschinenbediener oder eine Maschinensteuerung Informationen bezüglich einer korrekten oder nicht korrekten Positionierung des Werkstücks erhalten kann. Das Erkennen einer nicht korrekten Positionierung des Werkstücks zum Werkstückanschlag kann eine fehlerhafte Bearbeitung des Werkstücks vermeiden, sodass ein Ausschuss fehlerhafter Werkstücke minimiert werden kann.

Das Verfahren kann vorteilhafterweise vorsehen, dass die Auswerteeinheit zum Bestimmen des Kontakts zwischen dem wenigstens einen Anschlagelement mit dem Werkstück eine Änderung der Schwingungsamplitude und/oder Schwingungsfrequenz des erfassten Schwingungszustands ermittelt. Durch die Erfassung der Schwingungsfrequenz und/oder Schwingungsamplitude kann eine präzise Bestimmung einer Änderung des Schwingungszustands und somit eine präzise Bestimmung eines Kontakts zwischen dem Werkstück und dem Anschlagelement ermöglicht sein.

Gemäß einer weiteren vorteilhaften Ausgestaltung des Verfahrens kann der Kontakt zwischen dem wenigstens einen Anschlagelement mit dem Werkstück durch die Auswerteeinheit basierend auf einer Änderung des Schwingungszustands in wenigstens zwei Messintervallen ermittelt werden und/oder basierend auf einem Mittelwert des Schwingungszustands in den wenigstens zwei Messintervallen. Auf diese Weise kann die Bestimmung des Schwingungszustands anhand mehrerer Messungen und/oder einer Mittelwertbildung vorgesehen sein, wodurch ein möglicher Messfehler minimiert werden kann.

Vorteilhafterweise kann das Verfahren vorsehen, dass der Schwingungszustand des Anschlagelements durch die Schwingungseinrichtung periodisch angeregt wird und der Schwingungszustand des Anschlagelements durch die Schwingungseinrichtung zwischen der periodischen Anregung erfasst wird.

Auf diese Weise erfolgen die Anregung des Schwingungszustands und die Erfassung des Schwingungszustands abwechselnd aufeinanderfolgend. Dadurch können die Anregung des Schwingungszustands sowie die Erfassung des Schwingungszustands durch dieselbe Einrichtung erfolgen, beispielsweise durch ein Piezoelement oder eine Magnetspuleneinrichtung.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Ausführungsform einer offenbarungsgemäßen Werkzeugmaschine;
- Fig. 2: eine perspektivische Ansicht einer Werkstückauflage der Werkzeugmaschine gemäß Figur 1 mit einem Werkstückanschlag;
- Fig. 3: eine schematische Ansicht des Werkstückanschlags;
- Fig. 4: eine schematische Ansicht einer alternativen Ausführungsform eines Anschlagelements des Werkstückanschlags;
- Fig. 5: ein schematisches Schwingungsdiagramm des Werkstückanschlags;
- Fig. 6: ein alternatives schematisches Schwingungsdiagramm eines ungedämpften Schwingungszustands;
- Fig. 7: ein schematisches Schwingungsdiagramm gemäß Fig. 6 eines gedämpften Schwingungszustands;

### Beschreibung von Ausführungsformen

Gleiche Bezugszeichen, die in verschiedenen Figuren aufgeführt sind, benennen identische, einander entsprechende, oder funktionell ähnliche Elemente.

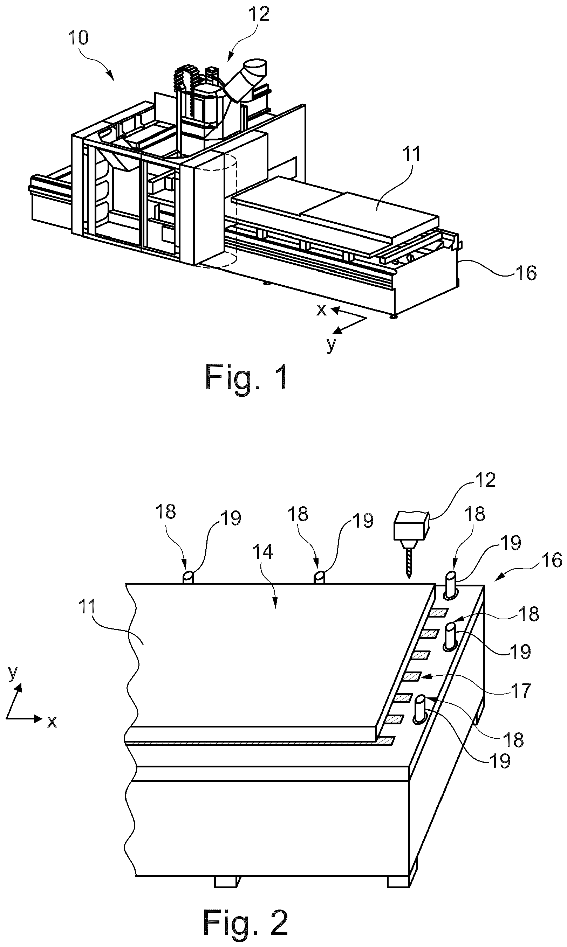

Figur 1 zeigt eine Werkzeugmaschine 10 zum Bearbeiten von Werkstücken 11. Bei der Werkzeugmaschine 10 kann es sich um eine beliebige Werkzeugmaschine zum Bearbeiten von Werkstücken 11 handeln. Insbesondere ist die Werkzeugmaschine 10 als eine Holzbearbeitungsmaschine ausgebildet. Zum Bearbeiten der Werkstücke 11 umfasst die Werkzeugmaschine 10 wenigstens ein Bearbeitungsaggregat 12, beispielsweise ein Fräswerkzeug, Sägewerkzeug, Bohrwerkzeug, Ablängwerkzeug, Kantenbearbeitungsaggregat, Kantenanleimaggregat oder dergleichen.

Wie in Figur 1 gezeigt kann die Werkzeugmaschine 10 als eine stationäre Bearbeitungseinrichtung ausgebildet sein. Bei dieser wird das zu bearbeitende Werkstück 11 durch einen Maschinenbediener oder maschinell in einem Arbeitsbereich 14 einer Werkstückauflage 16 positioniert. Das Bearbeitungsaggregat 12 kann zu dem Werkstück 11 verfahrbar vorgesehen sein, um den Bearbeitungsvorgang auszuführen. Die Werkzeugmaschine 10 kann als eine CNC-gesteuerte Werkzeugmaschine oder als ein CNC-gesteuertes Bearbeitungszentrum ausgebildet sein. Ebenso kann die Werkzeugmaschine 10 als eine Durchlaufbearbeitungseinrichtung ausgebildet sein, bei welcher das Bearbeiten der Werkstücke 11 im Durchlaufverfahren vorgesehen ist. Bei einer solchen Werkzeugmaschine 10 werden die zu bearbeitenden Werkstücke 11 durch eine Fördereinrichtung relativ zum Bearbeitungsaggregat 12 bewegt.

Bei den zu bearbeitenden Werkstücken 11 handelt es sich insbesondere um solche, die zumindest teilweise aus Holz, Holzwerkstoffen, Kunststoff, Verbundwerkstoffen oder dergleichen ausgebildet sind. Solche Werkstücke kommen beispielsweise im Bereich der Möbel- und Bauelementefertigung zum Einsatz. Dabei kann es sich um unterschiedlichste Werkstücke handeln, beispielsweise Massivholz- oder Spanplatten, Leichtbauplatten, Sandwichplatten oder ähnliche. Die vorliegende Erfindung ist jedoch nicht auf derartige Werkstücke beschränkt.

Figur 2 zeigt eine perspektivische Ansicht der Werkstückauflage 16 der Werkzeugmaschine 10 mit einem im Arbeitsbereich 14 angeordneten Werkstück 11. Exemplarisch ist als Bearbeitungsaggregat 12 ein schematischer Bohrkopf dargestellt, der zum Ausführen des Bearbeitungsvorgangs verfahrbar zum Werkstück 11 vorgesehen ist.

Die Werkstückauflage 16 bildet eine stationäre Aufnahme für ein oder mehrere Werkstücke 11. Die Werkstückauflage 16 ist hierfür beispielsweise als Konsole oder Tisch ausgebildet. Um das Werkstück 11 für den Bearbeitungsvorgang in einer ortsfesten Position zu fixieren, weist die Werkstückauflage 16 eine Spanneinrichtung 17 auf. Diese Spanneinrichtung 17 kann beispielsweise als eine Vakuumspanneinrichtung ausgebildet sein.

Wie bereits erwähnt, kann die Werkstückauflage 16 ebenso eine Fördereinrichtung aufweisen oder als eine Fördereinrichtung ausgebildet sein, sodass die zu bearbeitenden Werkstück 11 durch eine Förderbewegung relativ zum Bearbeitungsaggregat 12 bewegt werden.

Die Werkstückauflage 16 weist einen Werkstückanschlag 18 auf. Dieser Werkstückanschlag 18 ist zum Positionieren des Werkstücks 11 im Arbeitsbereich 14 der Werkzeugmaschine 10 vorgesehen. Der Werkstückanschlag 18 umfasst mehrere Anschlagelemente 19. Die Anschlagelemente 19 sind beabstandet zueinander in einem den Arbeitsbereich 14 begrenzenden Randbereich angeordnet. Die Anschlagelemente 19 des Werkstückanschlags 18 bilden eine Begrenzung des Arbeitsbereichs 14 in einer X-Richtung und einer Y-Richtung.

Um Kollisionen der Anschlagelemente 19 mit dem Bearbeitungsaggregat 12 zu verhindern, können diese in der Werkstückauflage 16 ein- und ausfahrbar oder zur Werkstückauflage 16 schwenkbar vorgesehen sein. Ist das Werkstück 11 auf der Werkstückauflage 16 positioniert und durch die Spanneinrichtung 17 fixiert, können die Anschlagelemente 19 automatisch in eine Nichtgebrauchsposition eingefahren oder ausgeschwenkt werden, beispielsweise durch einen pneumatischen Mechanismus.

Die Positionierung des Werkstücks 11 im Arbeitsbereich 14 der Werkzeugmaschine 10 erfolgt dadurch, dass der Maschinenbediener oder eine nicht näher dargestellte maschinelle Bestückungseinrichtung, beispielsweise ein Roboterarm, das zu bearbeitende Werkstück 11 auf die Werkstückauflage 16 auflegt, das Werkstück 11 zuerst in Kontakt zu den Anschlagelementen 19 in Y-Richtung gebracht wird und darauffolgend in Kontakt mit den Anschlagelementen 19 in X-Richtung. Auf diese Weise ist eine präzise Positionierung des zu bearbeitenden Werkstücks 11 im Arbeitsbereich 14 der Werkstückauflage 16 gewährleistet.

Gemäß Figur 2 sind die Anschlagelemente 19 als zylinderförmige Anschlagelemente 19 ausgebildet. Die Anschlagelemente 19 können jedoch auch beliebig andersartig ausgestaltet sein, beispielsweise als rechteckförmige Anschlagelemente 19. Ebenso können die Anschlagelemente 19 sowohl vertikal als auch horizontal angeordnet sein. Ebenso kann vorgesehen sein, dass sich die Anschlagelemente 19 entlang des Randbereiches des Arbeitsbereiches 14 erstrecken.

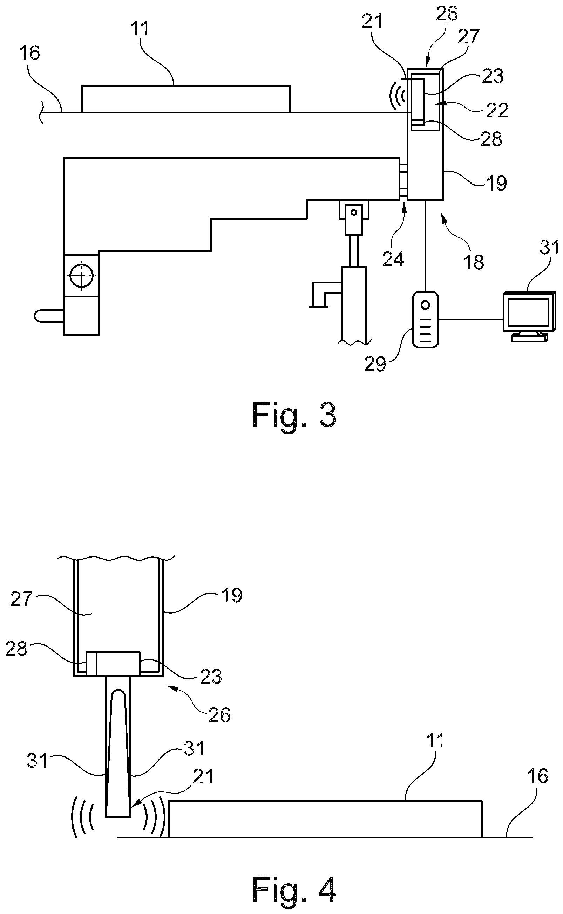

Figur 3 zeigt eine schematische Ansicht des Werkstückanschlags 18. Das Anschlagelement 19 ist in der Weise zur Werkstückauflage 16 ausgerichtet, dass das Werkstück 11 zum Positionieren in Kontakt zu einem Anschlag 21 des Anschlagelements 19 gebracht werden kann, also gegen den Anschlag 21 angeschlagen werden kann.

Das Anschlagelement 19 weist eine Schwingungseinrichtung 22 auf. Die Schwingungseinrichtung 22 ist in dem Anschlagelement 19 integriert vorgesehen. Ebenso kann die Schwingungseinrichtung 22 auch an dem Anschlagelement 19 angeordnet sein. Jedes Anschlagelement 19 weist jeweils eine Schwingungseinrichtung 22 auf. Die nachfolgenden Ausführungen beziehen auf nur ein Anschlagelement 19 des Werkstückanschlags 18, gelten jedoch ebenso für die weiteren Anschlagelemente 19 des Werkstückanschlags 18.

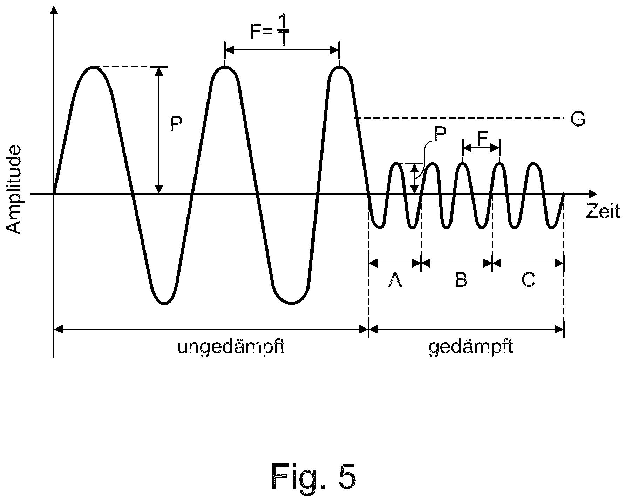

Durch die Schwingungseinrichtung 22 ist das Anschlagelement 19 in einen Schwingungszustand versetzbar. Die Schwingungseinrichtung 22 erzeugt einen ungedämpften Schwingungszustand des Anschlagelements 19. Der Schwingungszustand ist insbesondere durch eine oszillierende Schwingung gebildet. Die Schwingungen des ungedämpften Schwingungszustands weisen eine definierte Schwingungsamplitude P und eine definierte Schwingungsfrequenz F auf, worauf bezüglich Figur 5 noch näher eingegangen wird.

Zur Erzeugung der Schwingungen umfasst die Schwingungseinrichtung 22 ein Piezoelement 23 oder eine Magnetspuleneinrichtung, welches das Anschlagelement 19 durch Ansteuerung mit einer elektrischen Spannung in den Schwingungszustand versetzt. Die Schwingungseinrichtung 22, insbesondere das Piezoelement 23 oder die Magnetspuleneinrichtung, bildet einen Oszillator. Oszillatoren sind schwingfähige Systeme, die eine kontinuierliche Bewegung zwischen zwei Zuständen ausführen. Wird dem Oszillator keine Energie zugeführt, besitzt dieser eine definierte Nulllage. Das Piezoelement 23 verformt sich bei einer Ansteuerung mit einer elektrischen Spannung. Durch eine kontinuierliche und gleichmäßige Änderung der Spannung, führt das Piezoelement 23 die ungedämpfte oszillierende Schwingung aus. Durch die Magnetspuleneinrichtung ist ein Magnetspulenantrieb ausgebildet, der den Schwingungszustand durch Anlegen eines Wechselstroms erzeugt.

Die durch die Schwingungseinrichtung 22 erzeugten Schwingungen können einen Frequenzbereich von etwa 1000 bis 1500 Hz aufweisen. Der Frequenzbereich der Schwingungen kann auch größer 1500 Hz oder kleiner 1000 Hz sein. Ebenso können die durch die Schwingungseinrichtung 22 erzeugten Schwingungen Ultraschallschwingungen sein. Bei den erzeugten Schwingungen handelt es sich um Mikroschwingungen. Die Schwingungsauslenkung des Anschlagelements 19 liegt dadurch im pm-Bereich, sodass das Werkstück 11 durch das in Schwingung versetzte Anschlagelement 19 nicht beschädigt wird.

Das Anschlagelement 19 ist durch eine Halteeinrichtung 24 aufgenommen. Durch die Halteeinrichtung 24 ist das Anschlagelement 19 schwingungsentkoppelt zur Werkstückauflage 16 aufgenommen. Die Halteeinrichtung 24 kann beispielsweise Gummimuffen aufweisen, durch welche die Schwingungsentkopplung ausgebildet ist. Das Anschlagelement 19 kann dadurch eine freie, d.h. ungedämpfte Schwingung ausführen. Umgekehrt werden die Schwingungen des Anschlagelements 19 durch die Schwingungsentkopplung nicht auf die Werkstückauflage 16 bzw. die Werkzeugmaschine 10 übertragen.

Das Anschlagelement 19 ist durch einen sich länglich erstreckenden Grundkörper ausgebildet, der in dessen Längserstreckung einen freien Endabschnitt 26 als Anschlag 21 für das Werkstück 11 bildet. Durch den freien Endabschnitt 26 ist eine schwingungsgünstige Ausgestaltung des Anschlagelements 19 vorgesehen, sodass die Schwingungseinrichtung 22 das Anschlagelement 19 optimal in den Schwingungszustand versetzen kann. Hierfür ist die Schwingungseinrichtung 22 vorzugsweise im freien Endabschnitt 26 des Anschlagelements 19 angeordnet.

Das Anschlagelement 19 weist im freien Endabschnitt 26 einen Hohlraum 27 auf oder ist zumindest bereichsweise als Hohlkörper ausgebildet. Die Schwingungseinrichtung 22 ist in dem Hohlraum 27 oder Hohlkörper angeordnet. Das Anschlagelement 19 weist im Bereich des Hohlraums 27 oder Hohlkörpers eine Wanddicke auf, die in Richtung des freien Endabschnitts 26 abnimmt. Die abnehmende Wanddicke bewirkt, ähnlich einer Schwinggabel, ein positives Schwingungsverhalten, beispielsweise eine größere Schwingungsamplitude des freien Endabschnitts 26 des Anschlagelements 19.

Das Anschlagelement 19 ist insbesondere aus Polyoxymethylen (POM) ausgebildet. Zudem kann das Anschlagelement 19 aus einem thermoplastischen Kunststoff ausgebildet sein. Ebenso kann das Anschlagelement 19 auch aus einem metallischen Werkstoff, vorzugsweise aus Messing, ausgebildet sein.

Durch die Schwingungseinrichtung 22 wird zudem der Schwingungszustand des Anschlagelements 19 sensorisch erfasst. Dabei erfolgt die Schwingungserfassung durch das Piezoelement 23 oder die Magnetspuleneinrichtung. Ebenso kann die Schwingungseinrichtung 22 eine Schwingungserfassungseinrichtung 28 aufweisen. Diese kann als separate Einheit zum Piezoelement 23 oder der Magnetspuleneinrichtung vorgesehen sein, beispielsweise als eine Sensoreinrichtung oder ein weiteres Piezoelement 23 oder eine weitere Magnetspuleneinrichtung. Durch die Erfassung des Schwingungszustands ist ein Kontakt zwischen dem Anschlagelement 19 mit dem zu positionierenden Werkstück 11 ermittelbar. Zum Ermitteln der Änderung des erfassten Schwingungszustands weist die Schwingungseinrichtung 22 eine Auswerteeinheit 29 auf oder ist mit einer Auswerteeinheit 29 verbunden. Der Kontakt zwischen dem Werkstück 11 und dem Anschlagelement 19 bewirkt eine Dämpfung der Schwingung des Anschlagelements 19. Folglich kann aus einer Änderung des Schwingungszustands ein Kontakt zwischen dem Anschlagelement 19 und dem Werkstück 11 ermittelt werden. Hierauf wird nachfolgend noch näher eingegangen.

Die Auswerteeinheit 29 kann mit einer Anzeigeeinrichtung 31 verbunden sein, durch welche dem Maschinenbediener Informationen zu einem Kontakt des Werkstücks 11 mit dem Anschlagelement 19, also ein korrektes Positionieren des Werkstücks 11 zum Anschlagelement 19, angezeigt werden. Die Anzeigeeinrichtung 31 kann beispielsweise ein Bildschirm oder eine optische oder haptische Anzeigeeinrichtung sein.

Figur 4 zeigt eine alternative Ausführungsform eines Anschlagelements 19 des Werkstückanschlags 18. Bei dieser Ausführungsform ist der den Anschlag 21 für das Werkstück 11 des freien Endabschnitts 26 durch zwei Schwingungsschenkel 31 ausgebildet. Der freie Endabschnitt 26 ist dadurch ähnlich einer Schwinggabel bzw. Stimmgabel ausgebildet. Dabei ist anzumerken, dass das Anschlagelement 19 mit beiden Schwingungsschenkeln 31 zum Werkstück 11 ausgerichtet sein sollte, um einen Kontakt des Werkstücks 11 mit dem Anschlagelement 19 präzise zu erfassen. Beim Positionieren wird das Werkstück 11 somit in Kontakt zu beiden Schwingungsschenkeln 31 gebracht.

In Figur 5 ist ein schematisches Schwingungsdiagramm eines Anschlagelements 19 des Werkstückanschlags 18 dargestellt. Zur Veranschaulichung ist der Schwingungsverlauf in Figur 5 idealisiert dargestellt.

Das Schwingungsdiagramm zeigt einen ungedämpften Schwingungszustand und einen gedämpften Schwingungszustand des Anschlagelements 19, wobei das Anschlagelement 19 durch die Schwingungseinrichtung 22 mit einer konstanten Schwingungsfrequenz F angeregt wird. Im ungedämpften Schwingungszustand schwingt das Anschlagelement 19 mit einer definierten Schwingungsfrequenz F (in Fig. 5 ist die Frequenz F als Kehrwert der Periodendauer T angegeben) und einer definierten Schwingungsamplitude P. In dem ungedämpften Schwingungszustand ist das Anschlagelement 19 in keinem Kontakt zum Werkstück 11.

Wird das Werkstück 11 in Kontakt zu dem Anschlagelement 19 gebracht, bewirkt dieses die Dämpfung der Schwingung. Wie in dem Schwingungsdiagramm gezeigt, weist der gedämpfte Schwingungszustand gegenüber dem ungedämpften Schwingungszustand eine veränderte Schwingungsamplitude P auf. In dem gedämpften Schwingungszustand schwingt das Anschlagelement 19 insbesondere mit einer niedrigeren Schwingungsamplitude P als im ungedämpften Schwingungszustand. Aufgrund des unterschiedlichen Schwingungszustands zwischen der ungedämpften Schwingung und der gedämpften Schwingung, also einer Änderung der Schwingungsamplitude P, kann somit der Kontakt zwischen dem Werkstückanschlag 19 und dem Werkstück 11 ermittelt werden. In dem gedämpften Schwingungszustand kann aufgrund des Kontaktes des Werkstücks 11 mit dem Anschlagelement 19 auch eine Änderung der Schwingungsfrequenz F des Anschlagelements 19 auftreten.

Um eine fehlerhafte Bestimmung des Kontakts zwischen dem Werkstück 11 und dem Werkstückanschlag 18 zu vermeiden, ermittelt die Auswerteeinheit 29 die Änderung des erfassten Schwingungszustands in mehreren Messintervallen. In Figur 5 ist exemplarisch die Erfassung des Schwingungszustands in drei Messintervallen A, B, C dargestellt. Ebenso kann die Auswerteeinheit 29 die Änderung des erfassten Schwingungszustands in zwei oder mehr als drei Messintervallen ermitteln. Liegt der ermittelte Schwingungszustand, also die Schwingungsamplitude P und/oder die Schwingungsfrequenz F, in wenigstens zwei der drei Messintervalle unterhalb eines definierten Schwingungsgrenzwertes G bezüglich der ungedämpften Schwingung, ermittelt die Auswerteeinheit 29 den gedämpften Schwingungszustand und somit einen Kontakt zwischen dem Werkstück 11 und dem Anschlagelement 19.

Zudem kann zum Bestimmen des gedämpften Schwingungszustands aus den drei Messintervallen A, B, C des erfassten Schwingungszustands, also der Schwingungsamplitude P und/oder der Schwingungsfrequenz F, ein Mittelwert gebildet werden. Liegt dieser Mittelwert bezüglich der ungedämpften Schwingung unterhalb des definierten Grenzwertes G, ermittelt die Auswerteeinheit 29 den gedämpften Schwingungszustand und folglich den Kontakt zwischen dem Anschlagelement 19 und dem Werkstück 11.

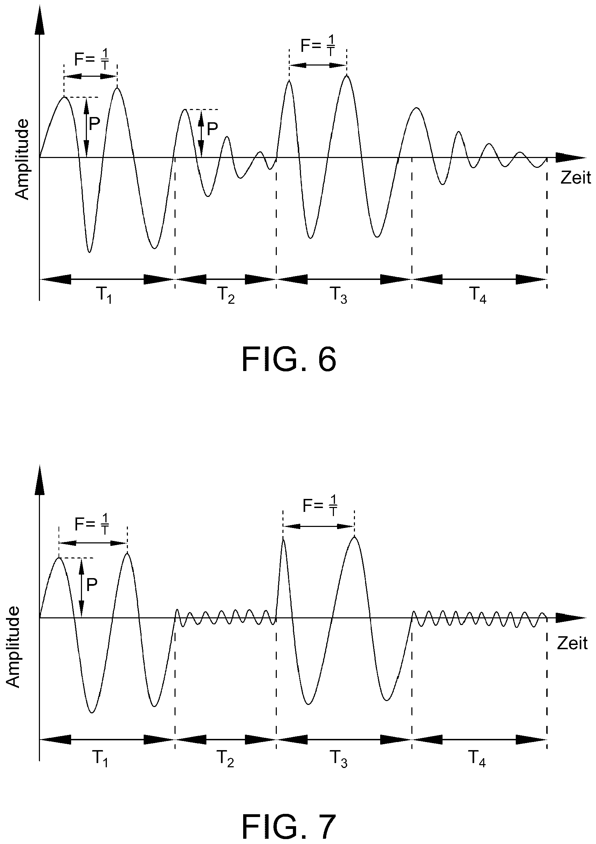

Die Figuren 6 und 7 zeigen jeweils ein schematisches Schwingungsdiagramm des Anschlagelements 19, wobei das Anschlagelement 19 durch die Schwingungseinrichtung 22 periodisch mit einer Schwingungsfrequenz F angeregt wird. Um den Kontakt zwischen dem Werkstück 11 und dem Anschlagelement 19 zu bestimmen, erfolgt hierbei die Anregung und die Erfassung des Schwingungszustands abwechselnd. Dabei zeigt Figur 6 einen ungedämpften Schwingungszustand des Anschlagelements 19 und Figur 7 einen gedämpften Schwingungszustand des Anschlagelements 19.

In Figur 6 wird das Anschlagelement 19 in den Zeitintervallen T1 und T3 mit der Schwingungsfrequenz F angeregt. Dagegen wird das Anschlagelement 19 in den Zeitintervallen T2 und T4 nicht angeregt und führt somit eine freie, ungedämpfte Schwingung aus. Hierbei tritt in den Zeitintervallen T2 und T4 eine gleichmäßige Abnahme der Schwingungsamplitude P auf. Wird ein solcher Schwingungsverlauf in den Zeitintervallen T2 und T4 erfasst, ermittelt die Auswerteeinheit 29 einen ungedämpften Schwingungszustand und somit keinen Kontakt zwischen dem Anschlagelement 19 und dem Werkstück 11.

Figur 7 zeigt dagegen den gedämpften Schwingungszustand des Anschlagelements 19, bei welchem das Werkstück 11 in Kontakt mit dem Anschlagelement 19 ist. In den Zeitintervallen T1 bis T4 wird das Anschlagelement 19 periodisch mit der Schwingungsfrequenz F angeregt. Dabei ändert sich die Amplitude in den Zeitintervallen T2 und T4 aufgrund der Berührung mit dem Werkstück. Aufgrund des Kontakts des Anschlagelements 19 mit dem Werkstück 11 tritt hierbei in den Zeitintervallen T2 und T4 eine sofortige Dämpfung des Schwingungszustands auf und somit eine sofortige starke Abnahme der Schwingungsamplitude P. Wird ein solcher Schwingungsverlauf in den Zeitintervallen T2 und T4 erfasst, ermittelt die Auswerteeinheit 29 einen gedämpften Schwingungszustand und somit einen Kontakt zwischen dem Anschlagelement 19 und dem Werkstück 11.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Werkstückanschlag (18) für eine Werkzeugmaschine (10), insbesondere eine Holzbearbeitungsmaschine, mit wenigstens einem Anschlagelement (19), das zu einem Arbeitsbereich (14) der Werkzeugmaschine (10) anordenbar ist, um ein Werkstück (11) durch einen Kontakt zum wenigstens einen Anschlagelement (19) im Arbeitsbereich (14) der Werkzeugmaschine (10) zu positionieren, **dadurch gekennzeichnet, dass** eine Schwingungseinrichtung (22) vorgesehen ist, die das wenigstens eine Anschlagelement (19) in einen Schwingungszustand versetzt und durch welche der Schwingungszustand des wenigstens einen Anschlagelements (19) erfassbar ist, um einen Kontakt zwischen dem wenigstens einen Anschlagelement (19) mit dem zu positionierenden Werkstück (11) zu ermitteln.

2. Werkstückanschlag nach Anspruch 1, bei dem ferner die Schwingungseinrichtung (22) in dem wenigstens einen Anschlagelement (19) integriert ist oder an dem wenigstens einen Anschlagelement (19) vorgesehen ist.

3. Werkstückanschlag nach Anspruch 1 oder 2, bei dem ferner die Schwingungseinrichtung (22) zum Anregen und/oder Erfassen des Schwingungszustands zumindest ein Piezoelement (23) oder zumindest eine Magnetspuleneinrichtung und/oder eine Sensoreinrichtung aufweist.

4. Werkstückanschlag nach einem der vorhergehenden Ansprüche, bei dem ferner eine Halteeinrichtung (24) vorgesehen ist, durch welche das wenigstens eine Anschlagelement (19) schwingungsentkoppelt aufgenommen ist.

5. Werkstückanschlag nach einem der vorhergehenden Ansprüche, bei dem ferner das wenigstens eine Anschlagelement (19) in dessen Längserstreckung einen freien Endabschnitt (26) als Anschlag (21) für das zu positionierende Werkstück (11) bildet und die Schwingungseinrichtung (22) in oder an dem freien Endabschnitt (26) des Anschlagelements (19) vorgesehen ist.

6. Werkstückanschlag nach einem der vorhergehenden Ansprüche, bei dem ferner das wenigstens eine Anschlagelement (19) einen Hohlraum (27) aufweist oder zumindest bereichsweise als Hohlkörper ausgebildet ist und vorzugsweise der Hohlraum (27) oder Hohlkörper in Richtung des freien Endabschnitts (26) eine abnehmende Wanddicke aufweist.

7. Werkstückanschlag nach einem der Ansprüche 1 bis 5, bei dem ferner der freie Endabschnitt (26) des wenigstens einen Anschlagelements (19) zwei Schwingungsschenkel (31) als Anschlag (21) für das Werkstück (11) aufweist.

8. Werkstückanschlag nach einem der vorhergehenden Ansprüche, bei dem ferner die Schwingungseinrichtung (22) eine Auswerteeinheit (29) aufweist, durch die eine Änderung des erfassten Schwingungszustands ermittelbar ist, vorzugsweise eine Änderung einer Schwingungsamplitude (P) und/oder Schwingungsfrequenz (F) des erfassten Schwingungszustands.

9. Werkzeugmaschine (10), insbesondere Holzbearbeitungsmaschine, mit einer Werkstückauflage (16) zum Aufnehmen wenigstens eines Werkstücks (11), mit einem der Werkstückauflage (16) zugeordneten Werkstückanschlag (18), um das wenigstens eine Werkstück (11) in einem Arbeitsbereich (14) der Werkzeugmaschine (10) zu positionieren sowie mit zumindest einem Bearbeitungsaggregat (12) zum Bearbeiten des wenigstens einen Werkstücks (11), **dadurch gekennzeichnet, dass** der Werkstückanschlag (18) nach einem der Ansprüche 1 bis 8 ausgebildet ist.

10. Werkzeugmaschine nach Anspruch 9, bei der ferner der Werkstückanschlag (18) mehrere Anschlagelemente (19) aufweist, die in der Weise zum Arbeitsbereich (14) der Werkzeugmaschine (10) angeordnet sind, dass ein Positionieren des wenigstens einen Werkstücks (11) auf der Werkstückauflage (16) in einer X-Richtung und/oder Y-Richtung vorgesehen ist, wobei jedes Anschlagelement (19) eine Schwingungseinrichtung (22) aufweist.

11. Verfahren zum Positionieren eines Werkstücks (11) in einem Arbeitsbereich (14) einer Werkzeugmaschine (10), insbesondere einer Holzbearbeitungsmaschine, aufweisend die Schritte, dass
- zumindest ein Anschlagelement (19) eines Werkstückanschlags (18) der Werkzeugmaschine (10) durch eine Schwingungseinrichtung (22) in einen Schwingungszustand versetzt wird,
- der Schwingungszustand des wenigstens einen Anschlagelements (19) durch die Schwingungseinrichtung (22) erfasst wird,
- das Werkstück (11) dem Arbeitsbereich (14) zugeführt und in Kontakt zu dem wenigstens einen Anschlagelement (19) gebracht wird, um das Werkstück (11) im Arbeitsbereich (14) der Werkzeugmaschine (10) zu positionieren und
- eine Auswerteeinheit (29) eine Änderung des erfassten Schwingungszustands ermittelt, um den Kontakt zwischen dem wenigstens einen Anschlagelement (19) mit dem Werkstück (11) zu bestimmen.

12. Verfahren nach Anspruch 11, bei dem ferner die Auswerteeinheit (29) zum Bestimmen des Kontakts zwischen dem wenigstens einen Anschlagelement (19) mit dem Werkstück (11) eine Änderung der Schwingungsamplitude (P) und/oder Schwingungsfrequenz (F) des erfassten Schwingungszustands ermittelt.

13. Verfahren nach Anspruch 11 oder 12, bei dem ferner der Kontakt zwischen dem wenigstens einen Anschlagelement (19) mit dem Werkstück (11) durch die Auswerteeinheit (29) basierend auf einer Änderung des Schwingungszustands in wenigstens zwei Messintervallen (A, B) ermittelt wird und/oder basierend auf einem Mittelwert des Schwingungszustands in den wenigstens zwei Messintervallen (A, B).

14. Verfahren nach einem der Ansprüche 11 bis 13, bei dem ferner der Schwingungszustand des Anschlagelements (19) durch die Schwingungseinrichtung (22) periodisch angeregt wird und der Schwingungszustand des Anschlagelements (19) durch die Schwingungseinrichtung (22) zwischen der periodischen Anregung erfasst wird.
